# EUROPEAN PATENT SPECIFICATION

(11) **EP 1 803 696 B1**
(45) Date of publication and mention of the grant of the patent: **24.10.2012**
(21) Application number: 06256536.1
(22) Date of filing: 22.12.2006
(51) Int. Cl.: C04B 37/00, C04B 35/581

(54) **Aluminum nitride bonded body, and manufacturing method of the same**
Verbundener Aluminiumnitrid Körper und Verfahren zur Herstellung derselben
Corps collé en nitrure d'aluminium et procédé pour fabriquer lemême

(30) Priority: 27.12.2005 US 754137 P
(43) Date of publication of application: 04.07.2007
(73) Proprietor: NGK Insulators, Ltd., Nagoya-City, Aichi Pref. 467-8530 (JP)
(72) Inventor: Hattori, Akiyoshi NGK Insulators, Ltd., Nagoya City, Aichi-ken, 467-8530 (JP)
(74) Representative: Paget, Hugh Charles Edward

(56) References cited:
- EP-A2- 0 856 499
- JP-A- 3 279 274
- US-A1- 2006 110 624

## Description

### BACKGROUND OF THE INVENTION

### 1. Field of the Invention

The present invention relates to an aluminum nitride bonded body and a manufacturing method of the same. More specifically, the present invention relates to a bonded body formed by bonding plural aluminum nitride members as constituent parts of a semiconductor manufacturing apparatus to one another, and to a manufacturing method of the same.

### 2. Description of the Related Art

Heretofore, when aluminum nitride members are bonded to one another, for example, solid phase bonding has been sometimes used. The solid phase bonding is a method for bonding the aluminum nitride members to one another in a state of a solid phase without interposing a bonding material therebetween (for example, refer to Japanese Patent Laid-Open Publication No. H08-73280(published in 1996)).

EP 0856499 discloses a method for the preparation of a heater in which a disc-shaped aluminum nitride susceptor is bonded to an aluminum nitride pipe in a hot press furnace at a temperature of 1700°C and a pressure of 60 KgF/cm².

Moreover, there has been known a method for manufacturing a bonded body, in which a bonding material containing aluminum nitride ceramics and a fusing material is provided between plural base members made of aluminum nitride ceramics, and a load is then applied to a body thus obtained while heating up the same to a predetermined temperature (for example, refer to Japanese Patent No. 3604888).

By using these bonding technologies, there has been manufactured a semiconductor manufacturing apparatus including, as constituent parts: a heating device having a heating body; an electrostatic chuck having an electrode; and the like.

JP 03279274 describes bonding a ceramic plate and pipe using a screw fitting with adhesive provided in the bore hole on the plate.

However, in the above-described conventional solid phase bonding, it has been necessary to set a bonding temperature at a temperature as high as 1850°C or more in order to obtain a good bonding state, and accordingly, there has been an apprehension that the aluminum nitride members are deformed owing to the bonding.

Moreover, in the case of performing the solid phase bonding in manufacturing processes of the heating device and the electrostatic chuck, there has been an apprehension that, owing to the high bonding temperature, the heating device and the electrode are deformed, and volume resistivity thereof is varied. As a result, there has been an apprehension that uniform heating performance of the heating device is decreased and that suction force of the electrostatic chuck is decreased. Furthermore, since it is necessary to maintain planarity of bonding surfaces of the aluminum nitride members extremely well, not only a cost increase has been brought but also a shape of bonding portions thereof has been restricted.

Furthermore, in the bonding method disclosed in Japanese Patent No. 3604888 described above, as shown in Paragraph 0061 of a specification thereof, it has been necessary to press the base members and the bonding material against each other in a direction perpendicular to the bonding surfaces as well as to heat up the same base members and bonding material.

In this connection, it is an object of the present invention to provide an aluminum nitride bonded body which is capable of obtaining the good bonding state even at a further lower bonding temperature and is not necessary to be pressed in a manufacturing process thereof, and to provide a manufacturing method of the same.

In order to achieve the foregoing object, an aluminum nitride bonded body according to the present invention includes: a stick-like attaching body in the form of a rod, a tube shaped elongate body) or a screw containing aluminum nitride; an attached body containing aluminum nitride, and having a support hole, a tip end portion of the attaching body being screwed into the support hole; and a bonding layer for bonding the attaching body and the attached body to each other, the bonding layer being formed at least between abutting pressure contact faces of the attaching and attached bodies, the abutting pressure contact faces being orthogonal to the axis of the tip end portion of the attaching body, such that the attaching body receives a pressure contact force by being screwed to the attached body, wherein the bonding material contains nitrogen, oxygen, aluminum and calcium (e.g. a ceramic composition of those elements), in which a content of a rare earth element is less than 15 wt%.

Heretofore, means for bonding the attaching body and the attached body, both of which contain aluminum nitride, to each other has been mainly the solid phase bonding and the liquid phase bonding. Moreover, since a pressing step has been heretofore necessary as described for Japanese Patent No. 3604888, it has been difficult to simultaneously bond a plurality of the attaching bodies to the attached body. However, according to the present invention, the plurality of attaching bodies are simultaneously bonded to the attached body, and accordingly, manufacturing efficiency can be enhanced.

Moreover, when the attaching body is a thin stick-like one, for example, a thin columnar or cylindrical one, it has been heretofore difficult to press the attaching body against the attached body by applying a load thereto. However, according to the present invention, the bonding material is formed at least on the abutting pressure contact faces between the attaching body and the attached body, where the attaching body receives the pressure contact force by such screwing. Specifically, in the present invention, the attaching body is bonded to the attached body by using the pressure contact force caused by the screwing. Accordingly, it becomes unnecessary to press the attaching body by applying the load thereto during the bonding process, and the aluminum nitride bonded body can be manufactured efficiently.

Moreover, since the above-described bonding material contains aluminum nitride, the bonding material has high adhesion property for aluminum nitride, and can surely bond the attaching body to the attached body.

Furthermore, the bonding material is disposed at least on such a region, where the attaching body receives the pressure contact force by the screwing, in the abutting faces between the attaching body and the attached body. Therefore, even if surface roughness is large on a region on which the bonding material is disposed, that is, on the pressure contact faces, the bonding material enters micro asperity formed on such bonding surfaces, and the attaching body and the attached body can be surely coupled to each other.

It is preferable that the bonding material contain 15 to 30 wt% of nitrogen, 10 to 35 wt% of oxygen, 20 to 55 wt% of aluminum, and 5 to 20 wt% of calcium.

Preferably, the attaching body is formed into a cylinder having a through hole, meanwhile, a through hole communicating with a bottom surface of the support hole is formed in the attached body, and the through hole of the attaching body is thereby made to communicate with the through hole of the attached body.

The through hole formed in the inside of the attaching body and the through hole of the attached body communicate with each other, and accordingly, a fluid such as helium gas can be fed from the attaching body to the attached body. Moreover, the support hole and the tip end portion of the attaching body is surely sealed by the above-described bonding material.

The attaching body and the attached body can be used in a temperature state as high as 300 to 800°C.

Preferably, the attached body is a member constructing a heating device of a semiconductor manufacturing apparatus, and the attaching body is a tubular member.

Moreover, the present invention makes it possible to bond the attaching body and the attached body to each other at a lower temperature as compared with that of the conventional bonding method. Accordingly, a heating body in the heating device of the semiconductor manufacturing apparatus is not deteriorated in quality, and volume resistivity thereof is hardly varied at the time of the above-described bonding. Therefore, the heating device exerts excellent performance.

A method of manufacturing an aluminum nitride bonded body according to the present invention includes the steps of: coating a bonding material on at least either a stick-like attaching body in the form of a rod, a tube-shaped elongate body or a screw containing aluminum nitride, or an attached body containing aluminum nitride; screwing a tip end portion of the attaching body into a support hole of the attached body and bringing the attaching body into pressure contact with the attached body through the bonding material; and heating up the attaching body, the bonding material, and the attached body at a bonding temperature of 1500°C or less, thereby bonding the attaching body to the attached body through a bonding layer formed at least between abutting pressure contact faces of the attaching body and the attached body, the abutting pressure contact faces being orthogonal to the axis of the tip end portion of the attaching body such that the attaching portion receives pressure contact force from the attached body by being screwed thereto, wherein the bonding material includes: a fusing material containing calcium aluminum oxide, or calcium oxide and aluminum oxide, in which a rare earth element occupies less than 5 wt%; and aluminum nitride powder.

According to the manufacturing method as described above, the bonding temperature is set at a temperature as low as 1500°C or less. Accordingly, thermal deformation of the aluminum nitride bonded body at the time of the above-described bonding is reduced to be extremely low. Moreover, since the bonding temperature is low, energy required for the bonding can be reduced, a reprocess after the bonding becomes unnecessary, and manufacturing cost can be reduced to a large extent.

In the above-described manufacturing method, preferably; the temperature is raised to the above-described bonding temperature at a temperature rise rate of 0.5 to 10.0°C/min.

Preferably, in the abutting portion between the attaching body and the attached body, average surface roughness of at least the pressure contact faces receiving the pressure contact force by the screwing is 0.4 to 1.6 µm.

By setting the average surface roughness in the above-described range, the bonding material is molten or softened, and fills the uneven surfaces of the pressure contact portions. Accordingly, bonding strength between the attaching body and the attached body can be enhanced.

In accordance with the aluminum nitride bonded body and the manufacturing method of the same according to the present invention, the plural attaching bodies can be simultaneously bonded to the attached body. Heretofore, the means for bonding the attaching body and the attached body, both of which contain aluminum nitride, to each other has been mainly the solid phase bonding and the liquid phase bonding. Moreover, since the pressing step has been necessary in the conventional bonding of the ceramics as described for Japanese Patent No. 3604888, it has been difficult to simultaneously bond the plural attaching bodies to the attached body. However, according to the present invention, the plural attaching bodies can be simultaneously bonded to the attached body.

Moreover, in accordance with the manufacturing method of an aluminum nitride bonded body according to the present invention, since the bonding temperature is set at the temperature as low as 1500°C or less, the thermal deformation of the aluminum nitride bonded body at the time of the bonding can be reduced to a large extent. Furthermore, since it is not necessary to press the attaching body against the attached body at the time of the bonding, the bonding process and apparatus can be simplified due to no external pressing system needed. Since the pressing system need not be installed in a manufacturing equipment, manufacturing an aluminum nitride bonded body becomes possible even in a general electric furnace and a normal pressure baking furnace.

### BRIEF DESCRIPTION OF THE DRAWINGS

FIG. 1 is a cross-sectional view showing an aluminum nitride bonded body according to an embodiment of the present invention.
FIG. 2 is a cross-sectional view showing an aluminum nitride bonded body according to another embodiment of the present invention.
FIG. 3 is a cross-sectional view showing a heating device of a semiconductor manufacturing apparatus according to the embodiment of the present invention.
FIG. 4 is a cross-sectional view showing an aluminum nitride bonded body according to another embodiment of the present invention.
FIG. 5 is a cross-sectional view showing an aluminum nitride bonded body according to another embodiment of present invention.
FIG. 6 is a cross-sectional view showing an aluminum nitride bonded body according to another embodiment of the present invention.
FIG. 7 is a cross-sectional view showing an aluminum nitride bonded body according to another embodiment of the present invention.
FIG. 8 is a cross-sectional view showing an aluminum nitride bonded body according to another embodiment of the present invention.

### DETAILED DESCRIPTION OF THE EMBODIMENTS

A description will be made below of an aluminum nitride bonded body and a manufacturing method of the same according to an embodiment of the present invention.

### [Bonding material]

A bonding material according to the embodiment of the present invention contains a fusing material and aluminum nitride (AlN) powder, and can be suitably used for bonding an attaching member and an attached member, both of which contain aluminum nitride, to each other.

It is preferable that the bonding material contains 10 to 90 wt% of the fusing material and 10 to 90 wt% of the aluminum nitride powder. According to such blending of the fusing material and the aluminum nitride powder, a difference in thermal expansion between the bonding material and the attaching and attached bodies containing aluminum nitride can be made small, and an appropriate quantity of the fusing material can be left on bonding portions of the attaching and attached bodies. Therefore, strength and air tightness of the bonding portions can be enhanced. It is more preferable that the bonding material contain 80 to 40 wt% of the fusing material and 20 to 60 wt% of the aluminum nitride powder. A rare earth element such as Y, Yb, Sm and Ce may be contained in the aluminum nitride powder.

### [Fusing Material]

The fusing material contains calcium aluminum oxide (CaxAlyOz), or calcium oxide (CaO) and aluminum oxide (Al₂O₃). Specifically, the fusing material contains at least calcium aluminum oxide, or both of calcium oxide and aluminum oxide. Therefore, preferably, the fusing material contains only calcium aluminum oxide, contains calcium aluminum oxide and calcium oxide, contains calcium aluminum oxide and aluminum oxide, contains calcium aluminum oxide, calcium oxide, and aluminum oxide, or contains calcium oxide and aluminum oxide.

Moreover, the fusing material can contain at least either one of Ca₁₂Al₁₄O₃₃ (x=12, y=14, z=33) and Ca₃Al₂O₆ (x=3, y=2, z=6) as calcium aluminum oxide (CaxAlyOz). Specifically, as calcium aluminum oxide, the fusing material may contain only Ca₁₂Al₁₄O₃₃, may contain only Ca₃Al₂O₆, may contain both of Ca₁₂Al₁₄O₃₃ and Ca₃Al₂O₆, or may contain calcium aluminum oxide having a phase other than those of Ca₁₂Al₁₄O₃₃ and Ca₃Al₂O₆ in addition to Ca₁₂Al₁₄O₃₃ and Ca₃Al₂O₆. A content of the rare earth element in the fusing material is less than 5 wt% with respect to a total quantity of the fusing material. The rare earth element does not have to be contained at all. The bonding material brings a gas-tight seal with a pressure at high temperature during a bonding process.

### [Aluminum Nitride Bonded Body]

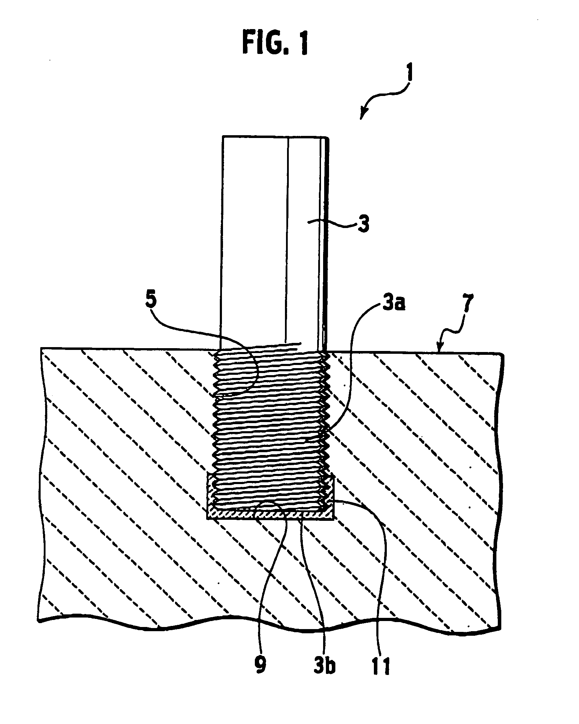

As shown in FIG. 1, an aluminum nitride bonded body according to this embodiment includes: an attaching body 3 which mainly contains aluminum nitride and is formed into a long-slender columnar shape (a stick-like shape); an attached body 7 mainly containing aluminum nitride, in which a tip end portion 3a of the attaching body 3 is screwed and bonded to a support hole 5; and a bonding layer 11 disposed on the entire of a bottom surface 9 of the support hole 5 of the attached body 7. The bonding layer 11 contains nitrogen (N), oxygen (O), aluminum (Al), and calcium (Ca), in which a content of the rare earth element is 15 wt% or less. The rare earth element contained in the bonding layer 11 is originally contained in the bonding material, or that the rare earth element contained in aluminum nitride in the attaching body 3 and the attached body 7 which are objects to be bonded enters the bonding layer 11. Alternatively, the rare earth element does not have to be contained at all.

The aluminum nitride bonded body 1 as described above can be obtained at a bonding temperature as low as 1500°C or less. Accordingly, thermal deformation of the attaching body 3 and the attached body 7 at a time when both of them are bonded to each other can be suppressed, and a bonding state thereof is also excellent. Moreover, a tip end surface 3b of the attaching body 3 and the bottom surface 9 of the support hole 5 of the attached body 7 are bonded to each other through the bonding layer 11. In such a state where the attaching body 3 is screwed to the support hole 5 of the attached body 3, the tip end surface 3b of the attaching body 3 receives pressure contact force caused by such screwing from the bonding layer 11 on the bottom surface 9. As described above, in the aluminum nitride bonded body 1 of FIG. 1, the tip end surface 3b and the bottom surface 9 of the support hole 5 become pressure contact portions to sandwich the bonding layer 11. Hence, since the attaching body 3 and the attached body 7 can be bonded to each other by using the pressure contact force caused by the screwing without applying a load thereto as heretofore, the bonding process and apparatus can be simplified due to no external pressing machine is needed. A material of the attaching body 3 and the attached body 7 is mainly aluminum nitride, and may contain the rare earth element such as Y, Yb, Ce and Sm.

Moreover, it is preferable that the bonding layer 11 contain 15 to 30 wt% of nitrogen, 10 to 35 wt% of oxygen, 20 to 55 wt% of aluminum, and 5 to 20 wt% of calcium. With such a composition of the bonding layer 11, the strength and air tightness of the bonding portions can be enhanced. It is preferable that the bonding layer 11 contain, for example, a compound N-O-Al-Ca, a compound N-O-Al-Ca-X (X is the rare earth element), calcium oxide, aluminum oxide, calcium aluminum oxide, or the like.

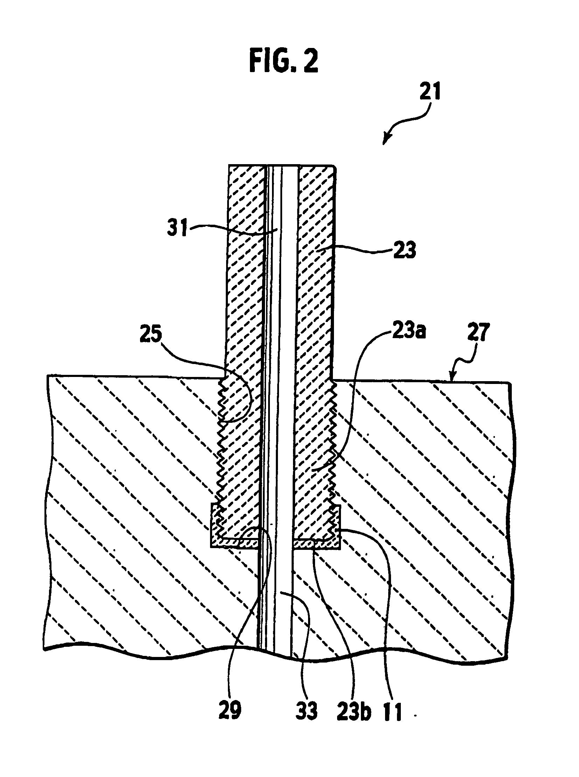

As shown in FIG. 2, another aluminum nitride bonded body 21 according to this embodiment includes: an attaching body 23 formed into a long-slender columnar shape (a stick-like shape); an attached body 27 in which a tip end portion 23a of the attaching body 23 is screwed and bonded to a support hole 25; and the bonding layer 11 disposed on a bottom surface 29 of the support hole 25 of the attached body 27. The bonding layer 11 has the same composition as that of the one described in FIG. 1. The aluminum nitride bonded body 21 as described above can be obtained at the bonding temperature as low as 1500°C or less. Accordingly, thermal deformation of the attaching body 23 and the attached body 27 at the time of the bonding can be suppressed, and a bonding state thereof is also excellent. The attaching body 23 and the attached body 27 are bonded to each other by using the pressure contact force caused to sandwich the bonding layer 11 by the screwing without applying the load thereto as heretofore.

Moreover, the attaching body 23 is formed into a substantially cylindrical shape having a through hole 31 in an inside thereof. The support hole 25 is formed in the attached body 27, and in the support hole 25, a through hole 33 communicating with the bottom surface 29 is formed. Hence, since the through hole 33 and the through hole 31 communicate with each other, when a fluid such as He gas is introduced from the tip end of the attaching body 23, the fluid is fed from the through hole 31 to the through hole 33.

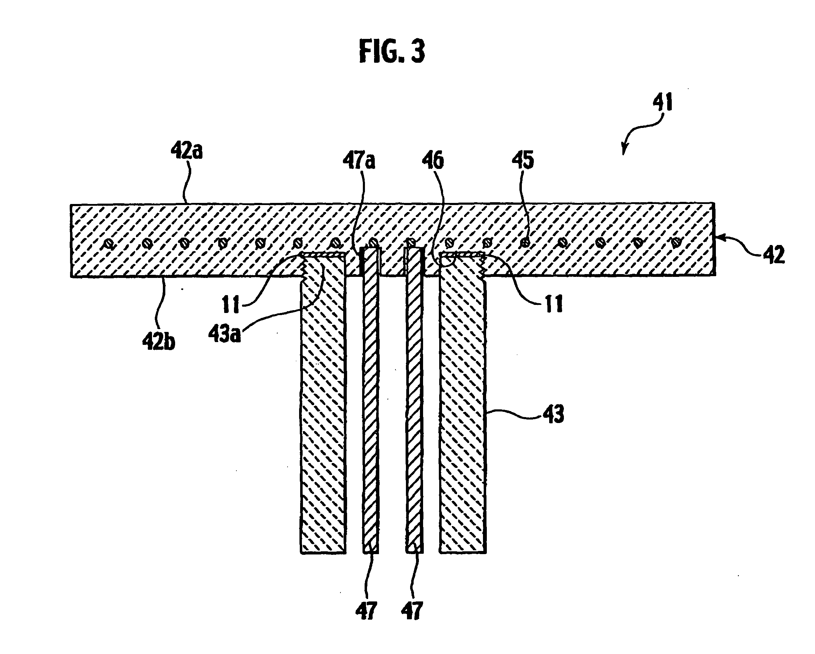

FIG. 3 is a cross-sectional view showing a heating device of a semiconductor manufacturing apparatus according to the embodiment of the present invention. The heating device 41 includes: a disc-like member (a plate) 42 as the attached body; a tubular member (a shaft) 43 as the attaching body; and the bonding layer 11 for bonding the disc-like member 42 and the tubular member 43 to each other, wherein both of the disc-like member 42 and the tubular member 43 contain aluminum nitride.

In an inside of the disc-like member 42, a heating element 45 is embedded. As the heating element 45, a resistance heating element such as molybdenum (Mo) and tungsten (W) can be used. Moreover, for the heating element 45, ones with a linear shape, a coil shape, a mesh shape, a sheet shape, a bulk shape, and the like can be used.

An upper surface of the disc-like member 42 is a mounting surface 42a on which a semiconductor substrate (a wafer) is mounted, and to a back surface 42b on an opposite side to the mounting surface 42a, the tubular member 43 is bonded. Specifically, an annular recessed portion (a support hole) 46 is formed on the back surface 42b, and the bonding layer 11 is formed on an inner surface of the recessed portion 46. Moreover, a tip end 43a of the tubular member 43 is fitted to the recessed portion 46, and the tip end 43a is fitted and bonded to the recessed portion 46 through the above-described bonding layer 11. Also in this case, the tubular member 43 is bonded to the disc-like member 42 by using the pressure contact force caused by the screwing without applying the load thereto as heretofore. According to the present invention, the bonded body can simplify the bonding process and apparatus since no external pressing machine is needed. The bonding layer 11 has the same composition as those of the ones described in FIG. 1 and FIG. 2.

Moreover, power supply members 47 are housed in an inner circumference side of the tubular member 43, and an end portion 47a of the power supply member 47 is electrically connected to terminals of the heating body 45 by brazing and the like. In such a way, the power supply member 47 can supply electric power to the heating body 45.

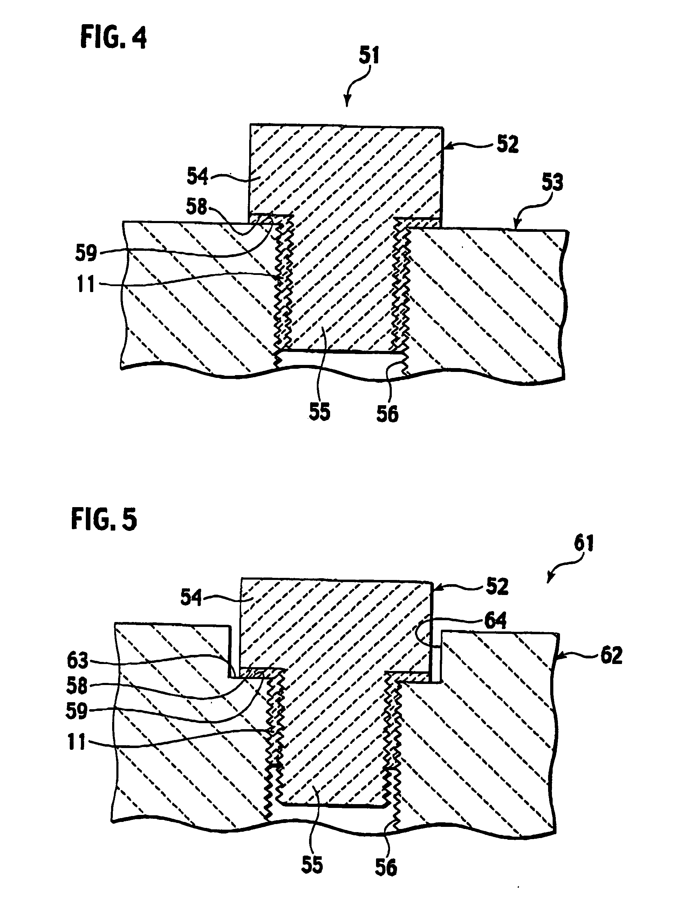

Furthermore, a description will be made of other aluminum nitride bonded bodies according to this embodiment by using FIG. 4 to FIG. 8.

In these aluminum nitride bonded bodies 51, 61, 71, 81 and 91, screws 52 and 82 as the attaching bodies are screwed to attached bodies 53, 62 and 83 having through-support holes 56, and the bonding layers 11 are formed on an abutting portions between the screws 52 and 82 and the attached bodies 53, 62 and 83. The above will be specifically described below.

The aluminum nitride bonded body 51 shown in FIG. 4 includes: the screw 52 as the attaching body; the attached body 53 having the support hole 56; and the bonding layer 11 formed on the abutting portion between the screw 52 and the attached body 53.

The screw 52 is integrally formed of a head portion 54 and a screw portion 55 disposed on a lower portion of the head portion 54, and the screw portion 55 is screwed to the screw hole 56 of the attached body 53. Moreover, by the screwing of the screw 52, an outer-circumferential lower surface 58 of the head portion 54 of the screw 52 receives pressure contact force directed upward from an upper surface 59 of the attached body 53. As described above, the outer-circumferential lower surface 58 and the upper surface 59 become the pressure contact portions to sandwich the bonding layer 11.

Moreover, the bonding layer 11 is formed between the outer-circumferential lower surface 58 of the screw 52 and the upper surface 59 of the attached body 53 and between an outer circumferential surface of the screw portion 55 of the screw 52 and an inner circumferential surface of the screw hole 56 of the attached body 53. This bonding layer 11 also has the same composition as those of the ones described in FIG. 1 to FIG. 3.

Next, in the aluminum nitride bonded body 61 shown in FIG. 5, a counterbore hole 64 is formed on an upper surface of the attached body 62, and the head portion 54 of the screw 52 is disposed in the counterbore hole 64.

By the screwing of the screw 52, the outer-circumferential lower surface 58 of the head portion 54 of the screw 52 receives the pressure contact force directed upward from the upper surface 59 of the counterbore hole 64 of the attached body 62. As described above, the outer-circumferential lower surface 58 and the upper surface 59 become the pressure contact portions to sandwich the bonding layer 11. The bonding layer 11 is formed between the outer-circumferential lower surface 58 of the head portion 54 of the screw 52 as the attaching body and the upper surface 59 of the counterbore hole 64 of the attached body 62, and between the outer circumferential surface of the screw portion 55 of the screw 52 and the inner circumferential surface of the screw hole 56 of the attached body 62. This bonding layer 11 also has the same composition as those of the ones described in FIG. 1 to FIG. 4.

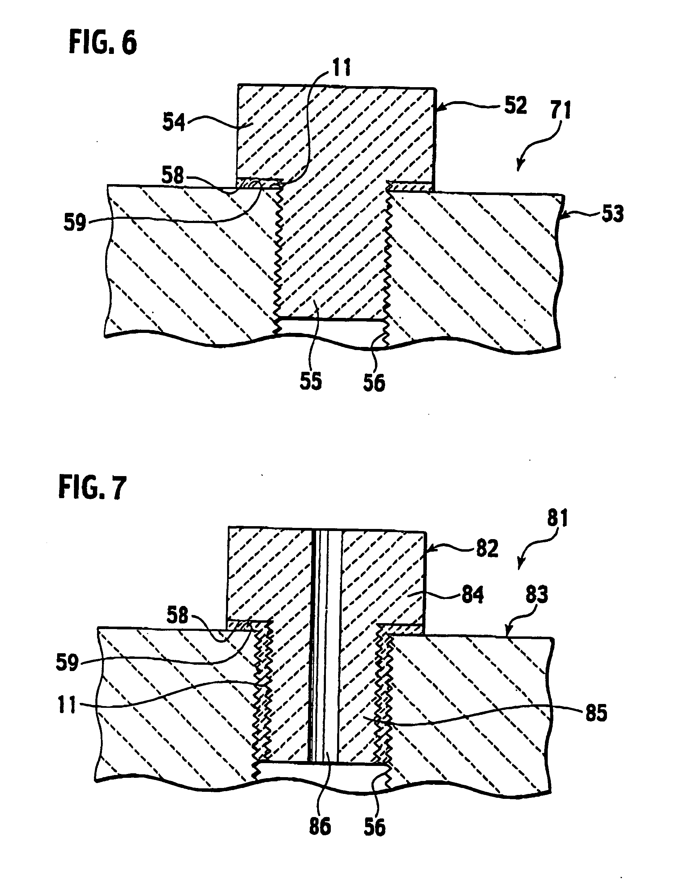

The aluminum nitride bonded body 71 shown in FIG. 6 includes: the screw 52; the attached body 53; and the bonding layer 11. In this case, as compared with the aluminum nitride bonded body shown in FIG. 4, the bonding layer is not formed on the screw portion 55, but the bonding layer 11 is formed between the outer-circumferential lower surface 58 of the head portion 54 of the screw 52 and the upper surface 59 of the attached body 53. As described above, the outer-circumferential lower surface 58 and the upper surface 59 become the pressure contact portions to sandwich the bonding layer 11. This bonding layer 11 has the same composition as those of the ones described in FIG. 1 to FIG. 5.

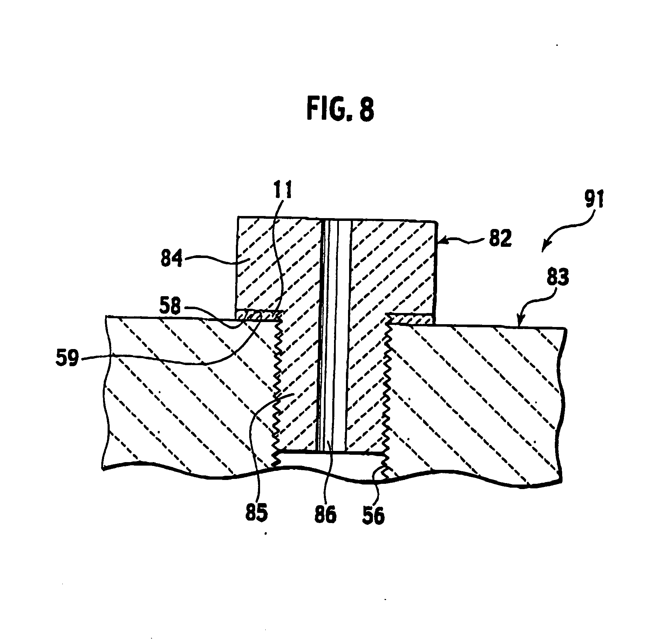

Moreover, in the aluminum nitride bonded bodies 81 and 91 shown in FIG. 7 and FIG. 8, through holes 86 penetrating the screws 82 along an axial direction are provided.

Specifically, the aluminum nitride bonded body 81 shown in FIG. 7 has substantially the same construction as that of the aluminum nitride bonded body 51 of FIG. 4, but is different therefrom in that the through hole 86 is formed in a diametrical center portion of the screw 82 as the attaching body along the axial direction. Moreover, the aluminum nitride bonded body 91 shown in FIG. 8 has substantially the same construction as that of the aluminum nitride bonded body 71 of FIG. 6, but is different therefrom in that the through hole 86 is formed in the diametrical center portion of the screw 82 as the attaching body along the axial direction. Also in these aluminum nitride bonded bodies 81 and 91, by the screwing of the screws 82, the outer-circumferential lower surfaces 58 of the head portions 84 of the screws 82 receive the pressure contact force directed upward from the upper surfaces 59 of the attached bodies 83. Hence, the screws 82 and the attached bodies 83 are bonded to each other by using the pressure contact force caused by the screwing to sandwich the bonding layer 11 without applying the load thereto as heretofore. Accordingly, the number of man-hours to manufacture the bonded bodies can be reduced. The bonding layers 11 in FIGS. 7 and 8 have the same composition as those of the ones described in FIG. 1 to FIG. 6.

According to these aluminum nitride bonded bodies 51, 61, 71, 81 and 91, the screw holes 56 penetrate the attached bodies 53, 62 and 83 in a thickness direction thereof, and accordingly, a thickness of each of the attached bodies 53, 62 and 83 can be thinned compared to FIG. 1 and FIG. 2.

### [Manufacturing Method of Aluminum Nitride bonded Body]

A description will be made of the manufacturing method of an aluminum nitride bonded body according to the embodiment of the present invention with reference to FIG. 2.

### (Coating step of bonding material)

A female screw is threaded on a side surface of the support hole 25 of the attached body 27. First, the bonding material is coated onto the bottom surface 29 of the support hole 25 and the side surface of the vicinity of the bottom surface 29. Average surface roughness of the bottom surface 29 of the support hole 25 is 0.4 to 1.6 µm.

The bonding material contains calcium aluminum oxide, or calcium oxide and aluminum oxide, and includes: the fusing material in which the rare earth element occupies less than 5 wt%; and the aluminum nitride powder. The bonding material can be mixed with IPA (isopropyl alcohol), ethanol, or the like to be easily coated on the above-described surfaces. The bonding material may be molded into a sheet shape, disposed on the bottom surface 29 of the support hole 25, and sandwiched between the attaching body 23 and the attached body 27. A quantity of the bonding material is preferably set at 5 to 35 mg/cm² A more preferable quantity of the bonding material is 10 to 30 mg/cm². When the fusing material in which the content of the rare earth element is 5 wt% or more is used, there is an apprehension that there occurs a necessity to perform the heating up to relatively higher temperature of 1500°C or more, bringing a relative disadvantage as like deformation possibility.

### (Screwing step of attaching body)

Next, the tip end portion 23a of the attaching body 23 is screwed to the support hole 25 of the attached body 27. A male screw is threaded on an outer circumference of the tip end portion 23a, and formed so as to be screwable to the female screw of the support hole 25 of the attached body 27. The attaching body 23 is being screwed to the attached body 27, and a tip end surface 23b of the tip end portion 23a is made to abut on the bonding material in the support hole 25. As described above, in this embodiment, it is not necessary to press the attaching body 23 against the attached body 27. Average surface roughness of the tip end portion 23a of the attaching body 23 is 0.4 to 1.6 µm.

In the case of the screwing, it is preferable that torque of 0.01 to 0.5 Nm be applied to the attaching body 23. When the torque is less than 0.01 Nm, there is an apprehension that the pressure contact force is insufficient to decrease the bonding strength. Meanwhile, when the torque becomes larger than 0.5 Nm, the torque caused by the screwing exceeds material strength of the attaching body 23 or the attached body 27, resulting in an occurrence of the deformation or damage.

### (Heating step)

In this state, the attaching body 23 and the attached body 27 are arranged in an atmosphere of inert gas such as nitrogen gas, or argon gas or in a reduced-pressure atmosphere, and heated up at the bonding temperature of 1500°C or less. According to this, the excellent bonding state can be obtained at the low bonding temperature, and the thermal deformation of the attaching body and the attached body, both of which contain aluminum nitride, is suppressed. It is preferable that the bonding temperature be 1400 to 1500°C. It is preferable to hold the attaching body 23 and the attached body 27 for five minutes to three hours at the bonding temperature though it depends on the sizes and shapes thereof.

Moreover, it is preferable to raise the temperature to the bonding temperature at a temperature rise rate of 0.5 to 10.0°C/min. When the temperature rise rate is less than 0.5°C/min, there is an apprehension that the fusing material, is crystallized to raise a melting point thereof, resulting in a deterioration of bonding property. When the temperature rise rate exceeds 10.0°C/min, there is an apprehension that the attaching body 23 and the attached body 27 are broken due to a large thermal distribution stress , resulting in a decrease of yield.

As described above, according to the manufacturing method of an aluminum nitride bonded body according to this embodiment, the excellent bonding state can be obtained at the bonding temperature as low as 1500°C or less. Therefore, the obtained aluminum nitride bonded body has not only an excellent bonding state, but also the deformation of the aluminum nitride bonded body is small. In addition, since the bonding temperature is low, energy necessary for the bonding can be reduced, and a reprocess after the bonding becomes unnecessary. Accordingly, the manufacturing cost can be reduced to a large extent.

### EXAMPLES

The present invention will be described below through examples far more specifically.

### [Example 1]

Example 1 will be described. First, a description will be made in detail of an aluminum nitride bonded body according to Present invention example 1.

### (Fabrication step of aluminum nitride bonded body)

First, 5 wt% of yttrium oxide was added as sintering aids to 95 wt% of aluminum nitride powder, and was mixed therewith by using a ball mill. A binder was added to mixed powder thus obtained, and was granulated by a spray granulation method. The granulated powder thus obtained was molded into a plate-like molded body and a tubular molded body by metal molding and CIP. The plate-like molded body (the attached body) thus obtained was fired at 1860°C for six hours in nitrogen gas by a hot press method, and the tubular molded body (the attaching body) thus obtained was fired at 1860°C for 6 hours in nitrogen gas by normal pressure firing. By this hot press firing, the above-described plate-like molded body became a plate-like fired body, and the above-described tubular molded body became a tubular fired body.

Subsequently, a support hole having a female screw was formed in the above-described plate-like fired body, and a male screw was formed on a tip end portion of the above-described tubular fired body. The support hole was formed so that the tip end portion of the tubular fired body could be screwed thereto.

### (Bonding step)

A bonding material was prepared, in which a fusing material made of 50 wt% of calcium oxide (CaO) and 50 wt% of aluminum oxide (Al₂O₃) and aluminum nitride powder containing 5 wt% of yttrium (Y) were mixed into PVA and ethanol, and were made into a paste. The bonding material was uniformly coated on a bottom surface of the support hole of the above-described plate-like fired body so that a quantity of the bonding material could be 14 mg/cm².

Subsequently, the tip end portion of the tubular fired body was screwed to the support hole of the plate-like fired body until a tip end surface of the tip end portion abuts on the bonding material. In this state, the tubular fired body and the plate-like fired body were arranged in nitrogen gas, and held at a bonding temperature of 1450°C for two hours. The temperature rise rate was set at 3.3°C/min, and the nitrogen gas (pressure: 1.5 atm) was introduced after the bonding temperature reached 1200°C. The step described above is shown as "low-temperature bonding" in Table 1. When the tubular fired body was screwed, the tubular fired body was tightened with torque of 0.1 Nm, and thus the tip end of the tubular fired body was adapted to be thrust against the bottom surface of the support hole of the plate-like fired body by thrust caused by the screwing.

As described above, the tubular fired body was bonded to the plate-like fired body through the bonding layer, and the aluminum nitride bonded body shown in FIG. 2 was thereby fabricated.

### (Evaluation method)

The strength and the air tightness were evaluated for bonding portions of the aluminum nitride bonded body according to Present invention example 1 described above. With regard to the strength, four-point bending strength was measured at room temperature in conformity with JIS R1601. The strength was individually measured before a durability test (hereinafter, referred to as an "initial state") and after the durability test. The durability test was performed by repeating the following process a hundred times, in which the aluminum nitride bonded body was heated up to 800°C at a temperature rise rate of 10°C/min and cooled to room temperature in the atmosphere.

With regard to the air tightness, a leakage quantity of helium gas introduced from the outside of the aluminum nitride bonded body and flown into the tube of the tubular fired body from the bonding portions was measured by using a helium detector.

Results of the above are shown in Table 1 below.

**[Table 1]**

| | Bonding method | Presence of load when bonded | Presence of screw in bonding portion | Initial (after bonding) | | After heat cycle test | | Result |
|---|---|---|---|---|---|---|---|---|
| | | | | Strength (MPa) | Leakage quantity of He (Torr·1/ sec) | Strength (MPa) | Leakage quantity of He (Torr·1/ sec) | |
| Present invention example 1 | Low temperature bonding | None | Present | 280 | 1×10⁻⁸ or less | 275 | 1×10⁻⁸ or less | Excellent |
| Comparative example 1 | Low temperature bonding | None | None | 160 | 1×10⁻⁸ or lees | 100 | 1×10⁻⁸ or more | Poor |
| Comparative example 2 | Solid phase bonding | None | Present | 100 | 1×10⁻⁸ or more | 35 | 1×10⁻⁸ or more | Bad |
| Comparative example 3 | Liquid phase bonding | None | Present | 100 | 1×10⁻⁸ or more | 35 | 1×10⁻⁸ or more | Bad |

From Table 1, in the aluminum nitride bonded body according to Present invention example 1, it was verified that, after the durability test, the strength thereof was hardly decreased, and the leakage quantity of the helium gas was not changed.

### (Comparative examples)

Moreover, in Comparative example 1, in a similar way to Present invention example 1 described above, a plate-like fired body and a tubular fired body were fabricated, and the tubular fired body was bonded to the plate-like fired body through the bonding layer. However, the male screw was not formed on the tip end portion of the tubular fired body, and the female screw was not formed on the support hole of the plate-like fired body, either.

In Comparative examples 2 and 3, the male screws were formed on tip end portions of tubular fired bodies, and the female screws were formed on support holes of plate-like fired bodies. However, the tubular fired bodies were bonded to the plate-like fired bodies by using solid phase bonding as the bonding method in Comparative example 2, and by using solid-liquid bonding that is a type of liquid phase bonding in Comparative example 3, respectively.

In the solid phase bonding of Comparative example 2, specifically, an aqueous solution of 2.61×10⁻⁴ mol/cc hydrate of an yttrium nitrate solution (Y(NO₃)₂· 6H₂O) was coated on the bonding surfaces, the temperature was raised to 1850°C in nitrogen to heat the coated bonding surfaces for two hours, and the bonding was thereby performed.

In the solid-liquid bonding in Comparative example 3, specifically, mixed powder (eutectic point: 1375°C) obtained by mixing, in terms of weight percent, 37 wt% of CaO, 19 wt% of Y₂O₃, and 44 wt% of Al₂O₃ was used as the bonding material, and the bonding material was mixed with ethanol and coated on the bonding surfaces. Then, the temperature was raised to 1600°C in nitrogen for two hours to heat the coated bonding surfaces, and the bonding was thereby performed.

Similar strength and air tightness evaluations to those of Present invention example 1 were performed for the aluminum nitride bonded bodies of Comparative examples 1 to 3 described above. Results are shown in Table 1.

As seen from Table 1, in Comparative examples 1 to 3, it was confirmed that, after the heat cycle test, the strength of each thereof was decreased, and the leakage quantity of the helium gas was also increased.

As described above, it becomes clear that Present invention example 1 is advantageous as compared with Comparative examples 1 to 3 in the strength and the gas tightness after the heat cycle durability test.

### [Example 2]

Next, Example 2 will be described. In Example 2, only the composition of the fusing material in the bonding material was changed, and other conditions (for example, the manufacturing method of the aluminum nitride bonded body, and the like) were entirely set the same as those of Example 1.

With regard to the composition of the fusing material, calcium oxide powder and aluminum oxide powder were used in composition ratios shown in Table 2 below.

**[Table 2]**

| | Composition of fusing material | | Composition of bonding layer | | | | | Bonding strength [MPa] |
|---|---|---|---|---|---|---|---|---|
| | CaO equivalent [wt%] | Al₂O₃ equivalent [wt%] | Ca [wt%] | Al [wt%] | O [wt%] | N [wt%] | Y [wt%] | |
| Present invention example 2 | 41 | 59 | 7 | 52 | 13 | 25 | 3 | 295 |
| Present invention example 3 | 50 | 50 | 12 | 39 | 22 | 21 | 3 | 300 |
| Present invention example 4 | 58 | 41 | 20 | 25 | 33 | 18 | 4 | 305 |
| Comparative example 4 | 68 | 32 | 23 | 17 | 33 | 24 | 3 | 230 |
| Comparative example 5 | 30 | 70 | 4 | 57 | 28 | 8 | 3 | 220 |

A bonding material was prepared, in which the fusing material and aluminum nitride powder containing 5 wt% of yttrium (Y) were mixed into PVA and ethanol, and was made into a paste. A mixing ratio of the fusing material and aluminum nitride powder was set at 60: 40 in terms of weight. A coating quantity of the bonding material was set at 14 mg/cm² in each of the above examples.

From Table 2, it turned out that the aluminum nitride bonded bodies according to Present invention examples 2 to 4 became superior in bonding strength to those of Comparative examples 4 and 5. With regard to the compositions of the bonding layers in Present invention examples 2 to 4, nitrogen was set within a range of 15 to 30 wt%, oxygen was set within a range of 10 to 35 wt%, and calcium was set within a range of 5 to 20 wt%. The compositions of the bonding layers in Comparative examples 4 and 5 go out of these ranges.

### [Example 3]

Next, Example 3 will be described. In Example 3, only the surface roughness of the tip end surface 23b and the bottom surface 29, which are shown in FIG. 2, is changed, and other conditions (for example, the manufacturing method of the aluminum nitride bonded body, and the like) were entirely set the same as those of Example 1.

**[Table 3]**

| | Surface roughness of tip end surface 23b Ra [µm] | Surface roughness of tip end surface 29 Ra [µm] | Bonding strength [MPa] |
|---|---|---|---|
| Present invention example 5 | 0.4 | 0.4 | 290 |
| Present invention example 6 | 1 | 1 | 280 |
| Present invention example 7 | 1.6 | 1.6 | 260 |
| Comparative example 6 | 0.3 | 0.4 | 230 |
| Comparative example 7 | 1.7 | 1.7 | 250 |

As shown in Table 3, in Present invention examples 5 to 7, the average surface roughness of the tip end surface 23b and the bottom surface 29 was in a range within 0.4 to 1.6 µm, and in Comparative examples 6 and 7, values of the average surface roughness, which went out of the range within 0.4 to 1.6 µm, were present.

From Table 3, it turned out that the bonding strength of the aluminum nitride bonded bodies according to Present invention examples 5 to 7 became higher than that of Comparative examples 6 and 7.

## Claims

1. An aluminum nitride bonded body, comprising:
a stick-like attaching body (3,23,43,52,82) in the form of a rod, a tube-shaped elongate body or a screw, containing aluminum nitride;
an attached body (7,27,42,53,62,83) containing aluminum nitride and having a support hole (5, 25, 56), a tip end portion (3a,23a,43a,55,85) of the attaching body being screwed into the support hole(5,25,56); and
a bonding layer (11) for bonding the attaching body and the attached body to each other, the bonding layer being formed at least between abutting pressure contact faces (9, 3b, 29, 23b, 46, 43a, 58, 59) of the attaching body and the attached body, the abutting pressure contact faces being orthogonal to the axis of the tip end portion of the attaching body, such that the attaching body receives a pressure contact force by being screwed to the attached body,
wherein the bonding layer contains nitrogen, oxygen, aluminum and calcium, in which a content of a rare earth element is less than 15 wt%.

2. The aluminum nitride bonded body according to claim 1, wherein the bonding layer (11) contains 15 to 30 wt% of nitrogen, 10 to 35 wt% of oxygen, 20 to 55 wt% of aluminum, and 5 to 20 wt% of calcium.

3. The aluminum nitride bonded body according to any one of claims 1 to 2, wherein the attaching body (23,43,82) is formed into a cylinder having a through hole(31,86) and the attached body has through hole (33) communicating with the support hole, wherein the through hole of the attaching body communicates with the through hole of the attached body.

4. A method of manufacturing an aluminum nitride bonded body, comprising:
coating a bonding material on at least either a stick-like attaching body (3, 23, 43, 52, 82) in the form of a rod, a tube-shaped elongate body or a screw, containing aluminum nitride or an attached body (7,27,42,53,62,83) containing aluminum nitride;
screwing a tip end portion of the attaching body into a support hole (5, 25, 56) of the attached body and bringing the attaching body into pressure contact with the attached body through the bonding material; and
heating up the attaching body, the bonding material, and the attached body at a bonding temperature of 1500°C or less, thereby bonding the attaching body to the attached body through a bonding layer formed at least between abutting pressure contact faces (9, 3b, 29, 23b, 46, 43a, 58, 59) of the attaching body and the attached body, the abutting pressure contact faces being orthogonal to the axis of the tip end portion of the attaching body such that the attaching portion receives a pressure contact force from the attached body by being screwed thereto,
wherein the bonding material includes: a fusing material containing calcium aluminum oxide, or calcium oxide and aluminum oxide, in which a rare earth element occupies less than 5 wt%; and aluminum nitride powder.

5. The method according to claim 4, wherein, the average surface roughness of the pressure contact faces receiving the pressure contact force by the screwing is 0.4 to 1.6 µm.

6. The method according to any one of claims 4 to 5, wherein the temperature is raised to the bonding temperature at a temperature rise rate of 0.5 to 10.0°C/min.

## Patentansprüche

1. Aluminiumnitridverbundkörper, der Folgendes umfasst:
einen stabähnlichen Befestigungskörper (3, 23, 43, 52, 82) in Form eines Stabs, eines rohrförmigen länglichen Körpers oder einer Schraube, der Aluminiumnitrid enthält;
einen befestigten Körper (7, 27, 42, 53, 62, 83), der Aluminiumnitrid enthält und ein Trägerloch (5, 25, 56) aufweist, wobei ein Spitzenendabschnitt (3a, 23a, 43a, 55, 85) des Befestigungskörpers in das Trägerloch (5, 25, 56) eingeschraubt wird; und
eine Verbindungsschicht (11) zum wechselseitigen Verbinden des Befestigungskörpers und des befestigten Körpers, wobei die Verbindungsschicht zumindest zwischen aneinanderstoßenden Druckkontaktflächen (9, 3b, 29, 23b, 46, 43a, 58, 59) des Befestigungskörpers und des befestigten Körpers ausgebildet ist, wobei die aneinanderstoßenden Druckkontaktflächen im rechten Winkel auf die Achse des Spitzenendabschnittabschnitts des Befestigungskörpers stehen, so dass der Befestigungskörper Druckkräfte aufnimmt, wenn er an den befestigten Körper geschraubt wird,
wobei die Verbindungsschicht Stickstoff, Sauerstoff, Aluminium und Calcium enthält, wobei der Gehalt eines Seltenerdelements weniger als 15 Gew.-% beträgt.

2. Aluminiumnitridverbundkörper nach Anspruch 1, worin die Verbindungsschicht (11) 15 bis 30 Gew.-% Stickstoff, 10 bis 35 Gew.-% Sauerstoff, 20 bis 55 Gew.-% Aluminium und 5 bis 20 Gew.-% Calcium enthält.

3. Aluminiumnitridverbundkörper nach einem der Ansprüche 1 bis 2, worin der Befestigungskörper (23, 43, 82) zylinderförmig ist und ein Durchgangsloch (31, 86) aufweist und der befestigte Körper ein Durchgangsloch (33) aufweist, das mit dem Trägerloch in Kommunikation steht, wobei das Durchgangsloch des Befestigungskörpers mit dem Durchgangsloch des befestigten Körpers kommuniziert.

4. Verfahren zur Herstellung eines Aluminiumnitridverbundkörpers, das Folgendes umfasst:
das Beschichten zumindest eines stabähnlichen Befestigungskörpers (3, 23, 43, 52, 82) in Form eines Stabs, eines rohrförmigen länglichen Körpers oder einer Schraube, der Aluminiumnitrid enthält, oder eines befestigten Körpers (7, 27, 42, 53, 62, 83), der Aluminiumnitrid enthält, mit einem Verbindungsmaterial;
das Einschrauben eines Spitzenendabschnitts des Befestigungskörpers in ein Trägerloch (5, 25, 56) des befestigten Körpers und das Herstellen eines Druckkontakts zwischen dem Befestigungskörper und dem befestigten Körper über das Verbindungsmaterial; und
das Erhitzen des Befestigungskörpers, des Verbindungsmaterials und des befestigten Körpers auf eine Verbindungstemperatur von 1.500 °C oder weniger, wodurch der Befestigungskörper über die Verbindungsschicht, die zumindest zwischen aneinanderstoßenden Druckkontaktflächen (9, 3b, 29, 23b, 46, 43a, 58, 59) des Befestigungskörpers und des befestigten Körpers vorliegt, haftschlüssig mit dem befestigten Körper verbunden wird, wobei die aneinanderstoßenden Druckkontaktflächen im rechten Winkel auf die Achse des Spitzenendabschnitts des Befestigungskörpers stehen, so dass durch den befestigten Körper eine Druckkontaktkraft auf den Befestigungsabschnitt ausgeübt wird, wenn der Befestigungsabschnitt auf diesen aufgeschraubt wird,
wobei das Verbindungsmaterial Folgendes umfasst: ein Schmelzmaterial, das Calciumaluminiumoxid oder Calciumoxid und Aluminiumoxid enthält, worin ein Seltenerdelement weniger als 5 Gew.-% ausmacht, sowie ein Aluminiumnitridpulver.

5. Verfahren nach Anspruch 4, worin die mittlere Oberflächenrauigkeit der Druckkontaktflächen, die die Druckkraft im Zuge des Aufschraubens aufnehmen, 0,4 bis 1,6 µm beträgt.

6. Verfahren nach einem der Ansprüche 4 bis 5, worin die Temperatur in einer Temperaturanstiegsrate von 0,5 bis 10,0 °C/min auf die Verbindungstemperatur erhöht wird.

## Revendications

1. Corps lié en nitrure d'aluminium, comprenant :
un corps de fixation de type bâton (3, 23, 43, 52, 82) sous la forme d'une tige, d'un corps allongé en forme de tube ou d'une vis, contenant du nitrure d'aluminium ;
un corps fixé (7, 27, 42, 53, 62, 83) contenant du nitrure d'aluminium et comportant un trou de support (5, 25, 56), une partie d'extrémité terminale (3a, 23a, 43a, 55, 85) du corps de fixation étant vissée dans le trou de support (5, 25, 56) ; et
une couche de liaison (11) pour lier le corps de fixation et le corps fixé l'un à l'autre, la couche de liaison étant formée au moins entre les faces de contact par pression (9, 3b, 29, 23b, 46, 43a, 58, 59) contiguës du corps de fixation et du corps fixé, les faces de contact par pression contiguës étant orthogonales à l'axe de la partie d'extrémité terminale du corps de fixation, de sorte que le corps de fixation reçoit une force de contact par pression en étant vissé dans le corps fixé,
dans lequel la couche de liaison contient de l'azote, de l'oxygène, de l'aluminium et du calcium, dans lequel une teneur en élément des terres rares est inférieure à 15 % en poids.

2. Corps lié en nitrure d'aluminium selon la revendication 1, dans lequel la couche de liaison (11) contient 15 à 30 % en poids d'azote, 10 à 35 % en poids d'oxygène, 20 à 55 % en poids d'aluminium et 5 à 20 % en poids de calcium.

3. Corps lié en nitrure d'aluminium selon l'une quelconque des revendications 1 et 2, dans lequel le corps de fixation (23, 43, 82) est formé en un cylindre comportant un trou traversant (31, 86) et le corps fixé comporte un trou traversant (33) communiquant avec le trou de support, dans lequel le trou traversant du corps de fixation communique avec le trou traversant du corps fixé.

4. Procédé de fabrication d'un corps lié en nitrure d'aluminium, consistant à :
déposer un matériau de liaison sur au moins l'un ou l'autre d'un corps de fixation de type bâton (3, 23, 43, 52, 82) sous la forme d'une tige, d'un corps allongé en forme de tube ou d'une vis, contenant du nitrure d'aluminium ou d'un corps fixé (7, 27, 42, 53, 62, 83) contenant du nitrure d'aluminium ;
visser une partie d'extrémité terminale du corps de fixation dans un trou de support (5, 25, 56) du corps fixé et amener le corps de fixation en contact par pression avec le corps fixé par l'intermédiaire du matériau de liaison ; et
chauffer le corps de fixation, le matériau de liaison et le corps fixé à une température de liaison de 1500 °C ou moins, liant de ce fait le corps de fixation au corps fixé par l'intermédiaire d'une couche de liaison formée au moins entre les faces de contact par pression (9, 3b, 29, 23b, 46, 43a, 58, 59) contiguës du corps de fixation et du corps fixé, les faces de contact par pression contiguës étant orthogonales à l'axe de la partie d'extrémité terminale du corps de fixation de sorte que la partie de fixation reçoit une force de contact par pression du corps fixé en étant vissée dans celui-ci,
dans lequel le matériau de liaison comprend : un matériau de fusion contenant de l'oxyde de calcium-aluminium, ou de l'oxyde de calcium et de l'oxyde d'aluminium, dans lequel un élément des terres rares occupe moins de 5 % en poids ; et une poudre de nitrure d'aluminium.

5. Procédé selon la revendication 4, dans lequel la rugosité superficielle moyenne des faces de contact par pression recevant la force de contact par pression par le vissage est de 0,4 à 1,6 µm.

6. Procédé selon l'une quelconque des revendications 4 et 5, dans lequel la température est élevée à la température de liaison à une vitesse d'élévation de température de 0,5 à 10,0 °C/mn.
